# EUROPÄISCHE PATENTANMELDUNG

(11) **EP 0 736 288 A2**
(43) Veröffentlichungstag der Anmeldung: **09.10.1996**
(21) Anmeldenummer: 96103225.7
(22) Anmeldetag: 01.03.1996
(51) Int. Cl.: A61C 1/00

(54) **Schlauchkennung**

(30) Priorität: 09.03.1995 DE 19508481
(71) Anmelder: KALTENBACH & VOIGT GMBH & CO., D-88400 Biberach (DE)
(72) Erfinder: Beier, Stefan, 88400 Biberach (DE); Gmeinder, Hermann, 88400 Biberach (DE)
(74) Vertreter: Schmidt-Evers, Jürgen, Dipl.-Ing.

(57) **Zusammenfassung**

Vorrichtung zum Erkennen verschiedener zahnärztlicher Instrumente mit einer Meßeinrichung (2), die die einem entnommenen Instrument (9d) eigene Instrumentenimpedanz mißt und diese einer zentralen Steuereinheit (1) mitteilt. Die zentrale Steuereinheit (1) identifiziert aufgrund der ermittelten Impedanz des entnommenen Instrumentes (9d) den Typ des aus der Ablagevorrichtung entnommenen Instrumentes (9d) und steuert eine Versorgungseinrichtung (3) derart, daß die Versorgungseinrichtung (3) das entnommene Instrument mit den für das entnommene Instrument nach Art und Menge passenden Betriebsmitteln versorgt. Gemäß einem zweiten Ausführungsbeispiel wird der entnommene zahnärztliche Verbraucher berührungslos identifiziert.

## Beschreibung

Die vorliegende Erfindung betrifft eine Vorrichtung zum Erkennen der auf einem Schlauch aufgesteckten Instrumententeile bzw. Schlauchkupplungen.

An einem zahnärztlichen Behandlungsplatz werden in der Regel mehrere verschiedenartige Instrumente, z.B. Turbinenbohrer, elektrische Bohrer, Zahnsteinentfernungsgeräte oder Mehrfunktionshandstücke, betrieben. Die elektrische Versorgung der einzelnen Instrumente erfolgt entweder über spezifische Versorgungseinrichtungen für jeden Verbraucher oder über eine zentrale, intelligente elektronische Versorgungseinrichtung, die ihre elektrischen Ausgangsdaten auf die Bedürfnisse des angeschlossenen Instrumentes einstellt. Ebenso ist auch eine Mischung der beiden Verfahren denkbar. Wird eine zentrale intelligente Versorgungseinrichtung angewendet, so liefert diese Versorgungseinrichtung abhängig von dem angeschlossenen Instrumententyp das nach Art und Menge passende Betriebsmittel, z.B. Luft, Wasser oder Strom oder eine Mischung davon. Daher ist es wünschenswert, daß zum einen der angeschlossene Instrumententyp und zum anderen die passenden Betriebsmittel eines jeden Instrumententyps bekannt sind. Diesbezüglich sind bereits verschiedenartige Erkennungseinrichtungen zum Feststellen des angeschlossenen Instrumententyps bekannt.

Aus der P 42 20 522.0 der Anmelderin der vorliegenden Anmeldung ist es bekannt, jeden Verbraucher, d.h. jedes Instrument, mit einem charakteristischen Widerstandswert zu kodieren. Ebenso können ein Schlauch oder Zwischenstücke entsprechend kodiert werden, so daß sich für jede Instrumentenkombination eine charakteristische Widerstandsserienschaltung ergibt. Nach Entnahme eines Instrumentes aus der entsprechenden Ablagevorrichtung wird der angeschlossene Gesamt-Widerstandswert gemessen und aufgrund des gemessenen Widerstandswerts auf den angeschlossenen Instrumententyp geschlossen. Einer Steuereinheit sind dabei die nach Art und Menge jeweils passenden Betriebsmitteln für jeden Instrumententyp bekannt, so daß nach Feststellen des Instrumententyps eine Versorgungseinrichtung bezüglich der an den Instrumententyp abzugebenden Betriebsmittel entsprechend gesteuert werden kann. Bei der in der P-A-42 20 522.0 beschriebenen Vorgehensweise muß jedoch jedes Instrumenten-Handstück und jedes Zwischenstück extra mit einem Widerstandswert kodiert werden. Dies ist jedoch sowohl aufwendig als auch teuer.

Aus der EP-B1-0 479 868 ist es bekannt, von dem angeschlossenen Instrument an eine Regelschaltung einen Instrumenten-Identifikationskode zu melden, so daß die Regelschaltung die Betriebsparameter entsprechend instrumentenabhängig anpassen kann.

Die JP-A-62/137047 und JP-A-62/142548 schlagen ebenfalls vor, jedes Instrument mit einem charakteristischen Widerstandswert zu kodieren, so daß aufgrund des gemessenen Widerstandswerts beim Anschließen des Instrumentes auf den Instrumententyp geschlossen werden kann und dementsprechend die Betriebsmittel nach Art und Menge geregelt werden können. Gemäß diesen Druckschriften wird der Widerstand eines jeden Instrumentes automatisch beim Aufstecken des Instrumentes auf den Schlauch durch Ankoppeln des entsprechenden Widerstandswertes gemessen. Ebenso wird in diesen Druckschriften vorgeschlagen, die Instrumente mit Spulen jeweils unterschiedlicher und charakteristischer Induktivität zu versehen, so daß beim Aufstecken der Instrumente auf den Schlauch ein an der Schlauchkupplung vorhandener Ferritkern mit den entsprechenden Spulen magnetisch gekoppelt wird. Aufgrund der unterschiedlichen Induktivitäten der einzelnen Instrumente entstehen beim Aufstecken der Instrumente auf den Schlauch unterschiedliche Induktionsströme, so daß aufgrund der Induktionsstrom-Abweichungen auf den Typ des aufgesteckten Instrumentes geschlossen werden kann.

Bei sämtlichen zuvor beschriebenen Vorrichtungen bzw. Verfahren ist es jedoch unerläßlich, daß die einzelnen Instrumente jeweils mit verschiedenen Kodierungsmitteln versehen werden. Wie zuvor bereits erwähnt, ist dies jedoch aufwendig und zugleich teuer.

Der Erfindung liegt daher die Aufgabe zugrunde, eine verbesserte Vorrichtung zur Erkennung verschiedener zu einem zahnärztlichen Behandlungsplatz gehörender zahnärztlicher Instrumente anzugeben.

Die Aufgabe wird durch die in den unabhängigen Ansprüchen 1 und 14 angegebenen Merkmale gelöst.

Messungen an den verschiedenen elektrischen Verbrauchern, d.h. Instrumenten, haben gezeigt, daß die einzelnen Instrumente signifikant unterschiedliche elektrische Impedanzen aufweisen. Ein Turbinenbohrer weist z.B. eine Impedanz von 2,14 MOhm, ein elektrischer Motor eine Impedanz von 41 Ohm, ein Zahnsteinentfernungsgerät eine Impedanz von 145 kOhm und ein Multifunktionshandstück eine Impedanz von 10 Ohm auf. Die Erfindung macht sich daher diese Eigenschaft zu eigen und schlägt vor, ohne zusätzliche Kodierungsmittel direkt die den einzelnen Instrumenten eigene Impedanz zu messen. Aufgrund der von dem angeschlossenen Instrument gemessenen Impedanz kann dann auf den Instrumententyp geschlossen werden und entsprechend die Betriebsmittelversorgung gesteuert werden.

Gemäß einem zweiten Ausführungsbeispiel der Erfindung wird ein entnommenes Instrument berührungslos identifiziert. Dazu wird die Verfügbarkeit von Bauelementen und Systemen zur kontaktlosen Informationsübertragung ausgenutzt. Von der Firma Philips sind beispielsweise sogenannte PIT (progammable identification TAG) bekannt. Ein derartiges PIT ist nichts anderes als eine Markierung, die auf zu identifizierenden Gegenständen aufgebracht werden kann. Die von Philips vorgeschlagenen Markierungen umfassen einen in einem elektromagnetischen Feld schwingenden Parallelschwingkreis, der bei Vorhandensein elektromagentischer Energie Informationen abgibt. Erfindungsgemäß wird daher vorgeschlagen, derartige Markierungen an den Instrumenten oder Schlauchkopplungen anzubringen, so daß kontaktlos der auf einen Schlauch aufgesteckte Instrumententyp bzw. Kupplungstyp erkannt werden kann, und dann entsprechend die Betriebsmittelversorgung nach Art und Menge gesteuert werden kann.

Die Unteransprüche beschreiben vorteilhafte Ausgestaltungen der Erfindung.

Die Erfindung wird nachfolgend unter Bezugnahme auf die beigefügte Zeichnung näher erläutert. Es zeigen:
Fig. 1 ein Schaltdiagramm einer Schaltungsanordnung gemäß einem ersten Ausführungsbeispiel der Erfindung,
Fig. 2 eine detaillierte Ansicht der in Figur 1 gezeigten zentralen Steuereinheit,
Fig. 3 ein Schaltdiagramm einer Schaltungsanordnung gemäß einem zweiten Ausführungsbeispiel der Erfindung, und
Fig. 4 eine detaillierte Ansicht der in Figur 3 gezeigten Basisstation sowie der den einzelnen Instrumenten zugeordneten Signalgebern.

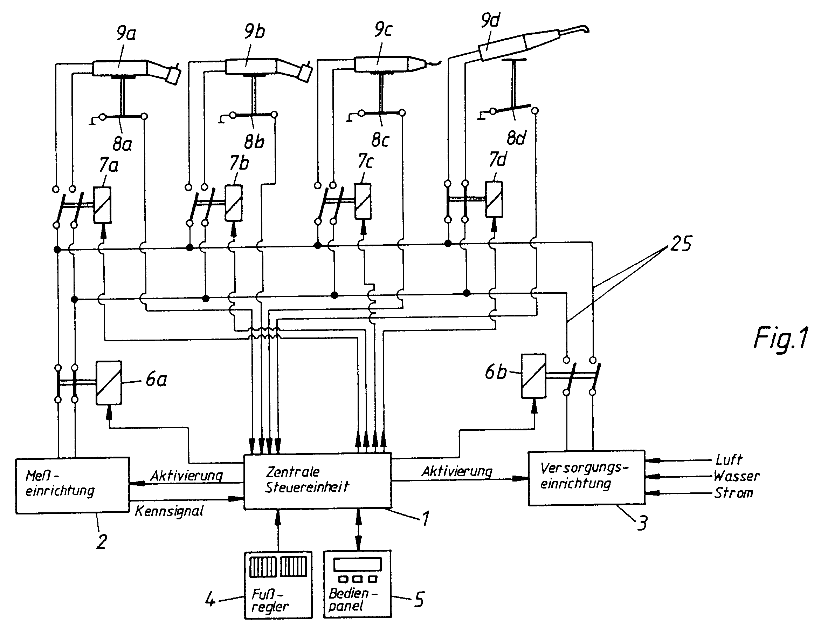

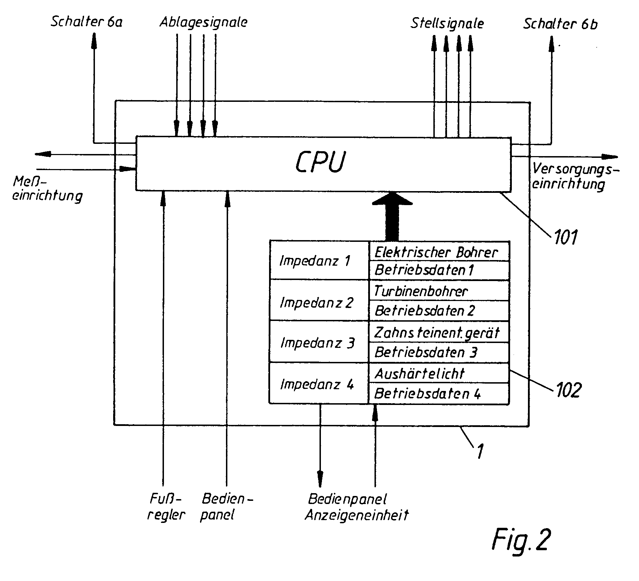

Zur Erläuterung des ersten erfindungsgemäßen Ausführungsbeispieles wird nachfolgend auf Figur 1 und 2 Bezug genommen.

In Figur 1 sind vier veschiedene zahnärztliche Instrumente dargestellt, nämlich ein elektrischer Bohrer 9a, ein Turbinenbohrer 9b, ein Zahnsteinentfernungsgerät 9c sowie ein Aushärtelicht 9d. Die einzelnen Instrumente befinden sich gewöhnlich in einer zu dem jeweiligen zahnärztlichen Behandlungsplatz gehörenden Ablagevorrichtung. Die Instrumente sind über steuerbare Schalter 7a-7d an einen zentralen Meß/Versorgungsbus anschließbar. Ablagesensoren 8a-8d dienen zum Erfassen des Entnehmens eines der Instrumente 9a-9d aus der Ablagevorrichtung. Derartige Ablagesensoren können beispielsweise mechanische Schalter sein. Ebenso sind jedoch auch Lichtschrankenschalter bekannt, die das Entnehmen eines Instrumentes aus der Ablagevorrichtung erfassen. Mithilfe zweier weiterer Schaltvorrichtungen 6a, 6b kann eine Meßeinrichtung 2 bzw. Versorgungseinrichtung 3 an den zentralen Meß/Versorgungsbus angeschlossen werden. Die Schalter 6 und 7 werden jeweils durch eine zentrale Steuereinheit eingestellt. Die Ablageposition eines jeden Instrumentes wird durch die Ablagesensoren 8a-8d der zentralen Steuereinheit 1 gemeldet.

Die Funktion der in Figur 1 gezeigten Schaltung soll nachfolgend erläutert werden. Im Ausgangszustand sind sämtliche Instrumente 9a-9d von dem zentralen Meß/Versorgungsbus 25 getrennt. Wird ein Instrument, in Figur 1 das Aushärtelicht 9d, aus der entsprechenden Ablagevorrichtung entnommen, so erfaßt dies der dem Instrument zugeordnete Ablagesensor, in Figur 1 der Ablagesensor 8d. Die einzelnen Ablagesensoren sind mit der zentralen Steuereinheit 1 verbunden, so daß der Ablagesensor 8d der zentralen Steuereinheit 1 die Entnahme des Instrumentes 9d mitteilt. Daraufhin erzeugt die zentrale Steuereinheit 1 ein Stellsignal für den Schalter 7d, so daß das Instrument 9d an den zentralen Meß/Versorgungsbus angeschlossen wird. Vorzugsweise enthält die zentrale Steuereinheit 1 eine Blockierschaltung, die bei Aktivierung eines der Schalter 7a-7d sämtliche andere Schalter deaktiviert, so daß die anderen Instrumente nicht an den zentralen Bus 25 angeschlossen werden können, solange ein anderes Instrument aus der Ablagevorrichtung entnommen ist. Nach Zuschalten des Instrumentes 9d auf den zentralen Meß/Versorgungsbus 25 erzeugt die zentrale Steuereinheit 1 ein Stellsignal für den einer Meßeinrichtung 2 zugeordneten Schalter 6a, so daß die Meßeinrichtung 2 ebenfalls an den zentralen Meß/Versorgungsbus 25 angeschlossen wird. Anschließend wird die Meßeinrichtung durch die zentrale Steuereinheit aktiviert. Die Meßeinrichtung 2 mißt über den Meß/Versorgungsbus 25 die Impedanz des ebenfalls an den Bus 25 angeschlossenen Instrumentes 9d. Nach erfolgreicher Messung gibt die Meßeinrichtung 2 ein entsprechendes Kennsignal an die zentrale Steuereinheit 1 ab. Die zentrale Steuereinheit vergleicht daraufhin den von der Meßeinrichtung 2 gemessenen Impedanzwert mit einer Reihe von vorgegebenen Impedanzwerten, die beispielseise in einem PROM-Speicher in der zentralen Steuereinheit 1 vorliegen. Durch den Vergleich des gemessenen Impedanzwertes mit den vorgegebenen Impedanzwerten kann die zentrale Steuereinheit 1 auf den an den zentralen Bus 25 angeschlossenen Instrumententyp schließen. Zu jedem Instrumententyp sind der zentralen Steuereinheit 1 auch die entsprechenden Betriebsdaten bezüglich Art und Menge des Betriebsmittels zum Betreiben der verschiedenen Instrumente bekannt. Die zentrale Steuereinheit 1 liest die dem identifizierten Instrument 9e entsprechenden Betriebsdaten aus, so daß anschließend die Versorgungseinrichtung 3 entsprechend durch die zentrale Steuereinheit 1 angesteuert werden kann. Zu diesem Zweck wird zunächst der der Meßeinrichtung 2 zugeordnete Schalter 6a geöffnet und anschließend der der Versorgungseinrichung 3 zugeordnete Schalter 6b geschlossen, so daß die Meßeinrichtung 2 von dem zentralen Meß/Versorgungsbus 25 getrennt und die Versorungseinrichtung 3 an den zentralen Meß/Versorgungsbus 25 angeschlossen wird. Anschließend erfolgt die Aktivierung der Versorgungseinrichtung 3 durch die zentrale Steuereinrichtung 1 sowie die Dimensionierung der von der Versorgungseinrichtung 3 gelieferten Betriebsmittel (Luft, Wasser, Strom) entsprechend den Betriebsdaten des identifizierten Instrumententyps. Aus Übersichtlichkeitsgründen sind in Figur 1 eigene Busleitungen für Luft oder Wasser nicht dargestellt.

In Figur 1 ist zudem ein Fußregler 4 und ein Bedienpaneel 5 gezeigt, wobei mit diesen Elementen auch extern auf die zentrale Steuereinheit 1 eingewirkt werden kann. So kann beispielsweise mit dem Fußregler 4 die Energieversorgung des angeschlossenen Instrumentes durch die Bedienperson extern gesteuert werden. Des weiteren kann mithilfe des Bedienpaneels 5 der Speicherinhalt der zentralen Steuereinheit 1 verändert werden, beispielsweise die Betriebsdaten der einzelnen Instrumente abgeändert werden. Zudem kann mit dem Bedienpaneel auch ein Display verbunden sein, so daß die jeweils eingestellten Betriebsdaten bzw. das jeweils in Betrieb befindliche Instrument graphisch dargestellt werden.

Figur 2 zeigt die in Figur 1 dargestellte zentrale Steuereinheit 1 in detaillierter Ansicht. Die zentrale Steuereinheit 1 umfaßt dabei eine Zentraleinheit 101 sowie einen Speicher 102, der vorzugsweise als PROM ausgebildet ist. In dem Speicher 102 sind unterschiedliche Impedanzwerte abgelegt, die jeweils mit dem von der Meßeinrichtung 2 gelieferten Impedanzwert verglichen werden, um den an den zentralen Meß/Versorgungsbus 25 angeschlossenen Instrumententyp zu ermitteln. Zu jedem Impedanzwert ist zudem in dem Speicher der Instrumententyp sowie die entsprechenden Betriebsdaten für die Ansteuerung der Versorgungseinrichtung 3 abgelegt. Die Zentraleinheit 101 liest den Inhalt des Speichers 102 aus. Der Speicherinhalt selbst kann extern über das Bedienpaneel 5 verändert werden. Ebenso kann extern über das Bedienpaneel 5 und den Fußregler 4 auf die Steuerung der zentralen Steuereinheit 1 eingewirkt werden. Anstelle eines fest in die zentrale Steuereinheit 1 eingebauten Speichers 102 ist jedoch auch eine austauschbare Speicherkarte denkbar, die ebenfalls entsprechend den Bedürfnissen frei progammiert werden kann. Abhängig von den an die Versorgungseinrichtung 3 anschließbaren unterschiedlichen Instrumententypen werden dann jeweils unterschiedliche Speicherkarten in die zentrale Steuereinheit 1 gesteckt, die daraufhin den Inhalt der Speicherkarte ausliest.

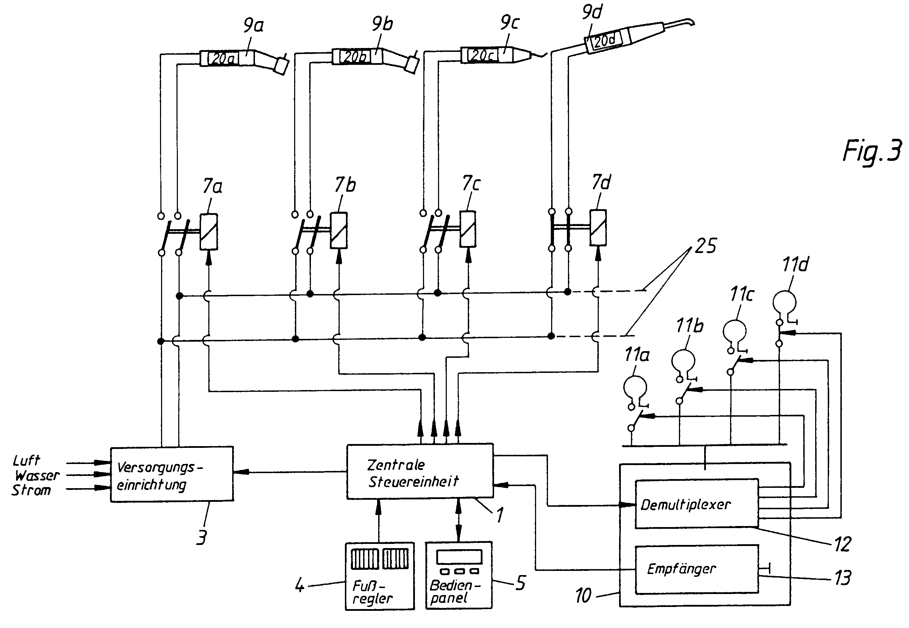

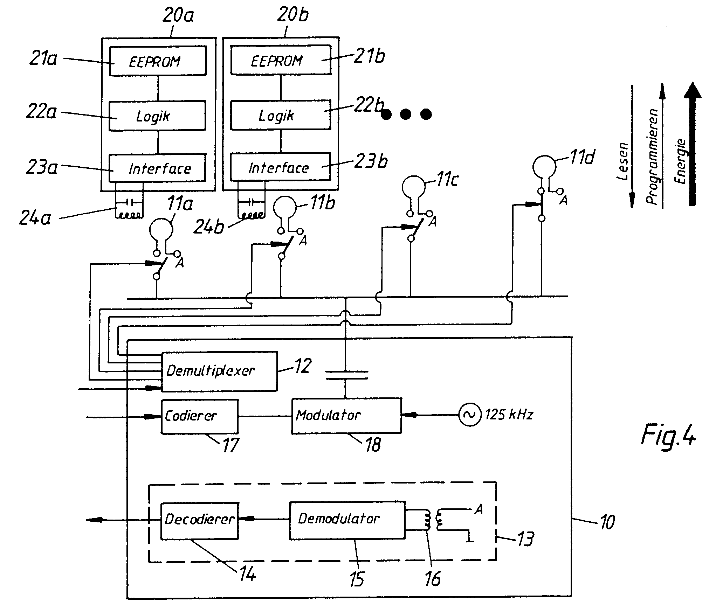

Nachfolgend wird ein zweites Ausführungsbeispiel der Erfindung unter Bezugnahme auf Figur 3 und 4 beschrieben.

Diejenigen in Figur 3 gezeigten Schaltelemente, die den in Figur 1 gezeigten entsprechen, sind mit identischen Bezugszeichen versehen und auf eine wiederholte Beschreibung wird verzichtet.

Nach dem zweiten erfindungsgemäßen Ausführungsbeispiel wird der Typ eines entnommenen Instrumentes kontaktlos, d.h. berührungslos ermittelt. Zu diesem Zweck werden Signalgeber 20a-20d eingesetzt, wie sie beispeilsweise von der Firma Philips unter dem Namen PIT vertrieben werden. Wie aus Figur 4 ersichtlich, besteht ein derartiger Signalgeber 20a-d (PIT) aus einem kontaklosen Interface 23a-d, einer Logik 22a-d, einem Speicher 21a-d, vorzugsweise einem EEPROM, sowie einem extern angeordeten Parallelschwingkreis 24a-d. Für kurze Übertragungsdistanzen kann auch auf den einer Spule parallelgeschaltete Kondensator verzichtet werden. Jedes Instrument 9a-d bzw. jede Schlauchkupplung ist mit einem derartigen Signalgeber 20a-d versehen, der das jeweilige Instrument bzw. die jeweilige Schlauchkupplung identifiziert. Der Speicher 21a-d eines jeden Signalgebers 20a-d umfaßt dabei die für die Kennzeichnung eines jeden Instruments wesentlichen Daten. In dem Speicher kann somit beispielsweise der Instrumententyp, das Fertigungsdatum sowie die zur Ansteuerung der Versorgungseinrichung 3 benötigten Betriebsdaten gespeichert sein. Die Daten werden vor Benutzung des Signalgebers in das EEPROM eines jeden Signalgebers geschrieben. Sobald dem Signalgeber 20a-d durch ein elektromagnetisches Feld Energie zugeführt wird, werden durch die Schwingung des Parallelschwingkreises 24a-d den in dem Speicher 21a-d gespeicherten Daten entsprechenden Informationssignale übertragen. Zum Empfang der übertragenen Daten ist, wie aus Figur 3 ersichtlich, eine Basisstation 10 vorgesehen, die die empfangenen Daten an die zentrale Steuereinheit 1 weiterleitet.

Der in Figur 3 gezeigte Schaltungsaufbau soll nachfolgend näher erläutert werden. Vor Inbetriebnahme des gesamten Systems werden die einzelnen Signalgeber 20a-d eines jeden Instrumentes bzw. jeder Schlauchkupplung mit den das jeweilige Instrument spezifierenden Daten progammiert. Die Basisstation 10 erzeugt ein elektromagnetisches Feld mit einer bestimmten Trägerfrequenz, in Figur 4 mit einer Frequenz von 125 kHz. Zur Übertragung der elektromagnetischen Energie an die einzelnen Signalgeber sind den einzelnen Signalgebern 20a-d jeweils Antennen 11a-d zugeordnet. Die Basisstation 10 sowie die Antennen 11a-d sind vorzugsweise in der Ablagevorrichtung der Instrumente 9a-d angeordnet. Mithilfe eines von der zentralen Steuereinheit 1 gesteuerten Demultiplexers 12 werden die einzelnen Antennen im Zeitmuliplex-Verfahren, d.h. zeitlich aufeinanderfolgend und sich wiederholend, nacheinander aktiviert. Vor Inbetriebnahme des Erkennungssystems wird jede Antenne 11a-d genau einmal aktiviert, d.h. jedem Signalgeber 20a-d wird jeweils einmal Energie zugeführt, woraufhin der jeweilige Signalgeber die in seinem Speicher 21a-b gespeicherten Daten in Form von Informationssignalen an die jeweilige Antenne 11a-d überträgt. Die von den Antennen empfangenen Daten werden von einer Empfangseinheit 13 empfangen und an die zentrale Steuereinheit 1 weitergeleitet. Dort werden die Daten in einem Speicher abgelegt, so daß die zentrale Steuereinheit die verschiedenen anschließbaren Instrumententypen sowie die jeweils entsprechenden Betriebsdaten zur Steuerung der Versorgungseinrichtung 3 aus dem Speicher auslesen kann. Wie aus Figur 4 ersichtlich, umfaßt die Empfangseinheit 13 einen Empfangsübertrager 16 sowie einen Demodulator 15 zur Demodulation der empfangenen Daten. Des weiteren kann ein Dekodierer 14 vorhanden sein, da für eine sichere Datenübertragung die von den Signalgebern 20a-d übertragenen Daten in kodierter Form vorliegen.

Nach der einmaligen Aktivierung aller Antennen 11a-d sowie dem einmaligen Auslesen der gespeicherten Daten der den jeweiligen Antennen zugeordneten Signalgebern 20a-d sind durch die zentrale Steuereinheit 1 die verschiedenen Instrumententypen sowie weitere benötigte Informationen erfaßt.

Anschließend wird das eigentliche Instrumenten- bzw. Schlauchkupplungserkennungssystem in Betrieb genommen. Zu diesem Zweck werden weiterhin - von der zentralen Steuereinheit 1 gesteuert - mithilfe des Demulitiplexers 12 die einzelnen Signalgeber 20a-d im Zeitmultiplex-Verfahren durch aufeinanderfolgende Aktivierung der den Signalgebern 20a-d zugeordneten Antennen 11a-d ausgelesen bzw. abgefragt. Wird nun ein Instrument aus der Ablagevorrichtung entnommen - in Figur 3 das Aushärtelicht 9d - , so kann die von dem dem entnommenen Instrument zugeordneten Signalgeber übertragenen Daten von der entsprechenden Antenne aufgrund der großen Entfernung nicht mehr empfangen werden. Dieser Mangel an Information wird von der zentralen Steuereinheit 1 als Entnahme des entsprechenden Instrumentes 9d betrachtet. Die zentrale Steuereinheit 1 schließt daraufhin das entsprechende Instrument (in Figur 3 Instrument 9d) durch Aktivierung eines diesem Instrument zugeordneten Schalters (in Figur 3 des Schalters 7d) an den zentralen Versorgungsbus 25 an. Mit dem Versorgungsbus 25 ist die Versorgungseinrichtung 3 verbunden. Die zentrale Steuereinheit 1 liest zu dem als entnommen erkannten Instrumententyp 9d die in ihrem Speicher abgelegten zugehörigen Betriebsdaten aus und aktiviert die Versorgungseinrichtung 3. Zugleich steuert die zentrale Steuereinheit 1 die Dimensionierung der von der Versorgungseinrichtung 3 gelieferten Betriebsmittel (Luft, Wasser, Strom) entsprechend den ausgelesenen Betriebsdaten. Auf diese Weise kann kontaklos die Entnahme eines Instrumentes erkannt werden und das entnommene Instrument mit nach Art und Menge passenden Betriebsmitteln automatisch versorgt werden.

Wie in Figur 4 gezeigt, kann als zusätzliche Eigenschaft die Basisstation 10 auch zum Übertragen von Daten an die Signalgeber 20a-d, d.h. zum Beschreiben der Speicher 21a-d, ausgebildet sein. Zu diesem Zweck umfaßt die Basiseinheit 10 zusätzlich einen Kodierer 17 sowie Modulator 18. Ist die Basiseinheit 10 schreibfähig, so kann beispielsweise mithilfe der Basiseinheit 10 der Speicher eines jeden Signalgebers 20a-d vor Inbetriebnahme des Erkennungssystems mit den die jeweiligen Instrumente charakterisierenden Daten beschrieben werden. Aus Kostengründen kann jedoch auf die Schreibfähigkeit der Basiseinheit 10 verzichtet werden.

Abschließend sei erwähnt, daß anstelle von PITs die einzelnen Instrumente auch mit charakteristischen Strichkodes versehen sein können, die mit an der Ablagevorrichtung vorgesehenen Strichkode-Lesern abgestastet werden. Ebenso sind weitere Lichtabtastungssystem denkbar.

## Patentansprüche

1. Vorrichtung zur Erkennung verschiedener zu einem zahnärztlichen Behandlungsplatz gehörender zahnärztlicher Instrumente (9a, 9b, 9c, 9d),
mit mindestens einer Meßeinrichtung (2) zum Erfassen eines für jeweils ein Instrument charakteristischen Instrumentenwertes,
mit einer zentralen Steuereinheit (1) zur Identifizierung eines aus einer Ablagevorrichtung entnommenen Instrumentes (9d) abhängig von dem von der Meßeinrichtung (2) gelieferten charakteristischen Instrumentenwertes, und
mit mindestens einer Versorgungseinrichtung (3) zur Versorgung des identifizierten Instrumentes (9d) mit den für das identifizierte Instrument nach Art und Menge passenden Betriebsmitteln (Luft, Wasser, Strom),
**dadurch gekennzeichnet,**
daß die Meßeinrichtung (2) die dem entsprechenden Instrument eigene Impedanz erfaßt.

2. Vorrichtung nach Anspruch 1,
**gekennzeichnet durch,**
mit der zentralen Steuereinheit (1) verbundene Ablagesensoren (8a-d), die das Abnehmen eines Instrumentes (9a-d) aus der Ablagevorrichtung erfassen.

3. Vorrichtung nach Anspruch 1 oder 2,
**gekennzeichnet durch,**
eine zentrale Meßeinrichtung (2), an die die zanhärztlichen Instrumente (9a-d) des zahnärztlichen Behandlungsplatzes anschließbar sind.

4. Vorrichtung nach einem der vorhergehenden Ansprüche,
**gekennzeichnet durch,**
eine zentrale Versorgungseinrichtung (3), an die die zahnärztlichen Instrumente (9a-d) des zahnärztlichen Behandlungsplatzes anschließbar sind.

5. Vorrichtung nach Anspruch 3 oder 4,
**gekennzeichnet durch,**
einen zentralen Meß/Versorgungsbus (25), an den die Instrumente (9a-d) des zahnärztlichen Behandlungsplatzes anschließbar sind.

6. Vorrichtung nach Anspruch 5,
**gekennzeichnet durch,**
erste Schaltermittel (7a-d) zum Anschließen eines aus der Ablagevorrichtung entnommenen Instrumentes (9d) an den zentralen Meß/Versorgungsbus (25), und zweite Schaltermittel (6a, 6b) zum Anschließen der zentralen Meßeinrichtung (2) oder der zentralen Versorgungseinrichtung (3) an den zentralen Meß/Versorgungsbus (25).

7. Vorrichtung nach Anspruch 6,
**dadurch gekennzeichnet,**
daß bei Entnahme eines Instrumentes (9d) aus der Ablagevorrichtung der dem entnommenen Instrument zugewiesene Ablagesensor (8d) die Entnahme des Instrumentes der zentralen Steuereinheit (1) mitteilt,
daß die zentrale Steuereinheit (1) durch Schließen der dem entnommenen Instrument (9d) zugeordneten ersten Schaltermittel (7d) das entnommene Instrument (9d) an den zentralen Meß/Versorgungsbus (25) anschließt,
daß die zentrale Steuereinheit (1) durch Schließen der der zentralen Meßeinheit (2) zugeordneten zweiten Schaltermittel (6a) die zentrale Meßeinrichtung (2) an den zentralen Meß/Versorgungsbus (25) anschließt,
daß die zentrale Meßeinrichtung (2) die dem entnommenen Instrument (9d) eigene Impedanz erfaßt und der zentralen Steuereinheit (1) mitteilt,
daß die zentrale Steuereinheit (1) abhängig von der gemessenen Impedanz den Typ des entnommenen Instrumentes (9d) identifiziert,
daß die zentrale Steuereinheit (1) nach Identifizierung des entnommenen Instrumentes (9d) die der zentralen Meßeinrichtung (2) zugeordneten zweiten Schaltermittel (6a) öffnet und die der zentralen Versorgungseinrichtung (3) zugeordnete zweiten Schaltermittel (6b) schließt, um die zentrale Meßeinrichtung (2) von dem zentralen Meß/Versorgungsbus (25) zu trennen und die zentrale Versorgungseinrichtung (3) an den zentralen Meß/Versorgungsbus (25) anzuschließen, und
daß die zentrale Steuereinheit (1) abhängig von dem identifizierten Instrumententyp die Abgabe der Betriebsmittel (Luft, Wasser, Strom) durch die zentrale Versorgungseinrichtung (3) nach Art und Menge steuert.

8. Vorrichtung nach einem der vorhergehenden Ansprüche,
**dadurch gekennzeichnet,**
daß die zentrale Steuereinheit ein aus der Ablagevorrichtung entnommenes Instrument durch Vergleich der von der Meßeinrichtung (2) erfaßten instrumenteneigenen Impedanz mit vorgegebenen Impedanzwerten identifiziert.

9. Vorrichtung nach Anspruch 7 und 8,
**dadurch gekennzeichnet,**
daß die zentrale Steuereinheit (1) die zentrale Versorgungseinrichtung (3) abhängig von den vorgegebenen instrumententypischen Impedanzwerten zugeordneten Betriebsdaten steuert.

10. Vorrichtung nach Anspruch 8 und 9,
**dadurch gekennzeichnet,**
daß die vorgegebenen Impedanzwerte und Betriebsdaten gespeichert sind, vorzugsweise in einem PROM (102).

11. Vorrichtung nach Anspruch 10,
**dadurch gekennzeichnet,**
daß die gespeicherten Impedanzwerte und Betriebsdaten manuell über ein Bedienpaneel (5) veränderbar sind.

12. Vorrichtung nach Anspruch 10,
**dadurch gekennzeichnet,**
daß die vorgegebenen Impedanzwerte und Betriebsdaten auf einer austauschbaren Speicherkarte gespeichert sind.

13. Vorrichtung nach einem der Ansprüche 6-12,
**dadurch gekennzeichnet,**
daß bei Entnahme eines Instrumentes (9d) aus der Ablagevorrichtung und nach Schließen der dem entnommenen Instrument (9d) zugeordneten ersten Schaltermittel (7d) die den übrigen Instrumenten (9a-c) zugeordneten ersten Schaltermittel (7a-c) nicht schließbar sind.

14. Vorrichtung zur Erkennung verschiedener zu einem zahnärztlichen Behandlungsplatz gehörender zahnärztlicher Verbraucher (9a-d), insbesondere verschiedener zahnärztlicher Instrumente oder Schlauchkupplungen,
mit einer zentralen Steuereinheit (1), zur Identifizierung eines aus einer Ablagevorrichtung entnommenen zahnärztlichen Verbrauchers (9d), und
mit einer von der zentralen Steuereinheit (1) angesteuerten zentralen Versorgungseinrichtung (3) zur Versorgung des identifizierten Verbrauchers (9d) mit den nach Art und Menge für den entnommenen Verbraucher (9d) passenden Betriebsmitteln (Luft, Wasser, Strom),
**dadurch gekennzeichnet,**
daß die zentrale Steuereinheit (1) die Entnahme des Verbrauchers (9d) aus der Ablagevorrichtung kontaktlos feststellt und den entnommenen Verbraucher (9d) kontaktlos identifiziert.

15. Vorrichtung nach Anspruch 14,
**dadurch gekennzeichnet,**
daß jeder der zahnärzlichen Verbraucher (9a-d) mit einem bezüglich der zentralen Steuereinheit (1) kontaktlosen Signalgeber (20a-d) versehen ist.

16. Vorrichtung nach Anspruch 15,
**dadurch gekennzeichnet,**
daß die Signalgeber (20a-d) jeweils einen Speicher (21a-d) zum Speichern von für den jeweiligen Verbraucher (9a-d) typischen Daten sowie ein Sendelement (24a-d) umfaßt, welches abhängig von den gespeicherten verbrauchertypischen Daten entsprechende Informationssignale sendet.

17. Vorrichtung nach Anspruch 16,
**dadurch gekennzeichnet,**
daß das Sendeelement (24a-d) aus einem Parallelschwingkreis besteht.

18. Vorrichtung nach Anspruch 16 oder 17,
**dadurch gekennzeichnet,**
daß zwischen dem Sendelement (24a-d) und dem Speicher (21a-d) in jedem Signalgeber (20a-d) eine Logikeinheit (22a-d) zum Kodieren der zu sendenen Informationssignale sowie ein kontaktloses Interface (23a-d) zum Übertragen der zu sendenden Informationssignale von der Logikeinheit (22a-d) zu dem Sendeelement (24a-d) geschaltet ist.

19. Vorrichtung nach einem der Ansprüche 16-18,
**dadurch gekennzeichnet,**
daß der Speicher (21a-d) ein EEPROM ist.

20. Vorrichtung nach einem der Ansprüche 16-19,
**dadurch gekennzeichnet,**
daß die in den Speichern (21a-d) gespeicherten Daten den jeweils entsprechenden Verbrauchertyp und/oder die für die Steuerung der zentralen Versorgungseinrichtung (3) erforderlichen Betriebsdaten umfassen.

21. Vorrichtung nach Anspruch 20,
**dadurch gekennzeichnet,**
daß die in den Speichern (21a-d) gespeicherten Daten auch das Herstellungsdatum des entsprechenden Verbrauchers (9a-d) umfassen.

22. Vorrichtung nach einem der Ansprüche 16-21,
**dadurch gekennzeichnet,**
daß das Sendelement (24a-d) jedes Signalgebers (20a-d) in einem elektromagnetischen Feld die in dem entsprechenden Speicher (21a-d) gespeicherten Daten in Form von Informationssignalen sendet.

23. Vorrichtung nach einem der Ansprüche 16-22,
**gekennzeichnet durch,**
einer mit der zentralen Steuereinheit (1) verbundenen Basiseinheit (10) zum Empfang der von den Signalgebern (20a-d) gesendeten Informationssignalen, zum Umwandeln der empfangenen Informationssignale in die entsprechenden Daten sowie zum Weiterleiten der empfangenen Daten an die zentrale Steuereinheit (1).

24. Vorrichtung nach Anspruch 22 und 23,
**dadurch gekennzeichnet,**
daß die Basiseinheit (10) für jeden Signalgeber (20a-d) selektiv ein elektromagnetisches Feld erzeugt.

25. Vorrichtung nach Anspruch 24,
**gekennzeichnet durch,**
von der Basiseinheit (10) angesteuerte Antennen (11a-d), wobei jedem Signalgeber (20a-d) bzw. Verbraucher (9a-d) genau eine Antenne (11a-d) zur Erzeugung des elektromagnetischen Feldes für den entsprechenden Signalgeber (20a-d) zugeordnet ist.

26. Vorrichtung nach Anspruch 25,
**gekennzeichnet durch,**
einen von der zentralen Steuereinheit (1) angesteuerten Demultiplexer (12), der zeitlich aufeinanderfolgend und wiederholt die einzelnen Antennen (11a-d) aktiviert, und eine Empfangseinheit (13) die abhängig von der jeweils aktivierten Antenne (11a-d) die von dem der aktivierten Antenne zugeordneten Signalgeber (20a-d) gesendeten Informationssignale erfaßt.

27. Vorrichtung nach Anspruch 26,
**dadurch gekennzeichnet,**
daß die Basisstation (10) eine Kodier- und eine Modulationseinheit (17, 18) zum Programmieren der Speicherinhalte der einzelnen Signalgeber (20a-d) enthält.

28. Vorrichtung nach einem der Ansprüche 25-27,
**dadurch gekennzeichnet,**
daß vor Inbetriebnahme der Erkennungsvorrichtung jede der Antennen (11a-d) einmal aktiviert wird, die in den Speichern (21a-d) der den Antennen (11a-d) zugeordneten Signalgeber (20a-d) gespeicherten Daten jeweils einmal ausgelesen werden und in einem Speicher der zentralen Steuereinheit (1) abgelegt werden.

29. Vorrichtung nach einem der Ansprüche 26-28,
**dadurch gekennzeichnet,**
daß die zentrale Steuereinheit (1) die von den Antennen (11a-d) empfangenen Daten auswertet, wobei die zentrale Steuereinheit (1) auf eine Entnahme eines Verbrauchers (9d) aus der Ablagevorrichung schließt, wenn die von dem Signalgeber (20d) des entnommenen Verbrauchers (9d) gesendeten Informationssignale nicht gelesen werden können.

30. Vorrichtung nach Anspruch 29,
**dadurch gekennzeichnet,**
daß die zentrale Steuereinheit (1) bei Feststellen der Entnahme eines Verbrauchers (9d) aus der Ablagevorrichtung den entsprechenden Verbraucher (9d) an die zentrale Versorgungseinrichtung (3) anschließt, auf die dem entnommenen Verbraucher (9d) typischen Betriebsdaten zugreift bzw. diese aus dem Speicher ausliest, und die Versorgungseinrichtung (3) gemäß den für den entnommenen Verbraucher (9d) typischen Betriebdsdaten ansteuert.

31. Vorrichtung nach Anspruch 14 oder 15,
**dadurch gekennzeichnet,**
daß jeder Verbraucher (9a-d) mit einem charakteristischen Strichkode versehen ist, und daß bei Entnahme eines Verbrauchers (9d) aus der Ablagevorrichtung der Strichkode des entnommenen Verbrauchers (9d) von einer Leseeinrichtung abgetastet wird.
